Europäisches Patentamt

European Patent Office

Office européen des brevets

(11) Veröffentlichungsnummer: **0 460 776 A1**

# (12) EUROPÄISCHE PATENTANMELDUNG

(21) Anmeldenummer: **91250101.2**

(51) Int. Cl.5: **H02P 8/00, H02P 7/00**

(22) Anmeldetag: **15.04.91**

(30) Priorität: **06.06.90 DE 4018421**

(43) Veröffentlichungstag der Anmeldung:.
**11.12.91 Patentblatt 91/50**

(84) Benannte Vertragsstaaten:
**AT BE CH DE FR GB IT LI NL**

(71) Anmelder: **MANNESMANN Aktiengesellschaft**
**Mannesmannufer 2**
**W-4000 Düsseldorf 1(DE)**

(72) Erfinder: **Hoffart, Alois**
**Leutkircher Strasse 23**
**W-7900 Ulm(DE)**
Erfinder: **Delmaier, Hubert**

**Buchenlandweg 15**
**W-7900 Ulm(DE)**
Erfinder: **Fromme, Lorenz**
**Hölderlinstrasse 1**
**W-7939 Öpfingen(DE)**
Erfinder: **Stein, Jutta**
**Stuibenweg 13**
**W-7918 Illertissen(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Steuerung für einen Schrittmotor.**

(57) Eine Steuerung für einen Schrittmotor (12), die einen Mikroprozessor (1) und einen ASIC (2) sowie Treiber-Bausteine (14a,14b) umfaßt, kann mit einem minimalen Schaltungsaufwand dahingehend gestaltet werden, daß die einzelnen Phasen (15,17) des Schrittmotors (12) jeweils mit einer variabel getakteten Speisespannung (38) beaufschlagbar sind und daß mittels des Mikroprozessors (1) die Modulation der Phasen (15,17) zeitlich abhängig veränderbar ist.

Fig.4

EP 0 460 776 A1

Die Erfindung betrifft eine Steuerung für einen Schrittmotor, bestehend aus einem Mikroprozessor mit Programm und Arbeitsspeicher, einem kundenspezifischen Schaltkreis und einem Treiberbaustein, der mit der Steuereinrichtung des Schrittmotors verbunden ist.

Im Zuge der Vereinfachung von motorisch betriebenen Systemen werden zunehmend Schrittmotoren anstelle von Gleichstrommotoren und anderen Arten von Elektromotoren eingesetzt. Die einfachste Ansteuerungform von Schrittmotoren stellen der Rechteckbetrieb dar. Aufgrund dieser Steuerung werden die einzelnen Phasen entweder nur ein- und ausgeschaltet oder umgepolt. Der Nicklungsstrom verläuft rechteckig. Der schaltungstechnische Aufwand solcher Steuerungen ist relativ gering. Aufgrund der steilen Flanken des Stromes werden bei niedrigen und mittleren Frequenzen jedoch Motor- und Lastresonanzen in einer Weise angeregt, daß sich der Einsatzbereich der Schrittmotoren oft nur auf höhere Betriebsfrequenzen reduziert, z.B. wenn Laufruhe gefordert ist. Außerdem erzeugt die Rechteckansteuerung eine nicht notwendig hohe Verlustleistung, die bei der Dimensionierung von Netzteilen berücksichtigt werden muß und die zu einer unnötigen Erwärmung des Motors führt.

Um diesen Nachteilen zu entgehen, ist man dazu übergegangen, die Schrittmotoren mit einer Sinussteuerung zu betreiben. Diese Ansteuerungsform besitzt folgende Vorteile: Es besteht praktisch keine Schwingungsneigung, und der Motor kann in einem breiten Drehzahlfeld betrieben werden. Die volle Ausnutzung des Schrittmotorwirkungsgrades ist gewährleistet und die Verlustleistung ist vernachlässigbar klein. Es ergibt sich eine gleichmäßige, ruckfreie Bewegung des Motors.

Diese Sinussteuerung ist jedoch auch nicht ohne Nachteile: Der Schaltungsaufwand für die Verwirklichung ist bezüglich der Regelung beträchtlich. So erfordert die Aufbereitung der Ansteuerfunktion etwa für einen Zwei-Phasen-Schrittmotor zwei um 90 Grad phasenverschobene Sinusfunktionen. Ein Fünf-Phasen-Schrittmotor würde fünf um 35 Grad phasenverschobene Sinusfunktionen benötigen. Herkömmliche Lösungen verwenden hierzu analoge Sinus-Funktionsgeneratoren mit entsprechender Phasenverschiebung. Andere bekannte Lösungen sehen die Verwendung eines Mikroprozessors vor, mit dem pro Schrittmotorphase ein Digital-Analog-Wandler mit bis zu fünf integrierten Konstantstromquellen sowie eine nachgeschaltete getaktete Konstantstromquelle verbunden sind. Zur Variation des Motor-Effektivstromes wird hierzu zusätzlich ein Zwei-Bit-Digtial-Analog-Umsetzer eingesetzt. Daher ist aus Kostengründen eine derart aufwendige Realisierung der Sinusfunktion in vielen Systemen nicht vertretbar.

Der vorliegenden Erfindung liegt daher die Aufgabe zugrunde, eine Steuerung für einen Schrittmotor zu schaffen, welche einerseits die Realisierung einer Form der Steuerung des Schrittmotors ermöglicht und die sich andererseits durch geringstmöglichen Schaltungsaufwand auszeichnet.

Die gestellte Aufgabe wird erfindungsgemäß dadurch gelöst, daß die einzelnen Phasen des Schrittmotors jeweils mit einer variabel getakteten Speisespannung beaufschlagbar sind und daß mittels des Mikroprozessors die Modulation der Phasen zeitlich abhängig veränderbar ist. Eine solche Steuerung bedarf außer dem Mikroprozessor eines geringsten Schaltungsaufwandes. Es ist daher möglich, die Sinusfunktion aufgrund geringstmöglicher Schaltungsteile zu verwirklichen, wobei eine solche Steuerung noch genauer als die bekannten Steuerungen arbeitet. Nach diesem Verfahren können außerdem Sägezahnspannungs-Verläufe, Trapezverläufe u.dgl. erzeugt werden.

Nach weitergehenden Merkmalen der Erfindung wird vorgeschlagen, daß zur Entlastung des Mikroprozessors die Modulation der Phasen über eine zusätzliche Digitalschaltung veränderbar ist. Eine solche Digitalschaltung kann aus einem kundenspezifischen Schaltkreis bestehen, so daß auch dadurch der Schaltungsaufwand geringstmöglich ist.

Die Erzeugung einer vorgegebenen Funktion geschieht nach anderen Merkmalen der Erfindung dadurch, daß die Werte für Geschwindigkeit, Drehrichtung und Weglänge sowie weitere steuerungsspezifische Parameter im Mikroprozessor errechnet werden, daß durch Unterteilung des Zeitrasters Kleinschritte gebildet werden, daß für jeden Kleinschritt durch den kundenspezifischen Schaltkreis pro Motor-Phase ein Abschnitt eines vorgegebenen Stromverlaufs erzeugt wird, indem pro Abschnitt eine Rechteckspeisespannung mit veränderbarer Frequenz und mit veränderbarem Tastverhältnis erzeugt wird, so daß die Folge der Kleinschritte z.B. einen weitestgehend angenäherten sinusförmigen Stromverlauf bildet.

Die Digitalschaltung wird vorteilhafterweise dahingehend ausgebildet, daß der kundenspezifische Schaltkreis mehrere Signaleingänge und Signalausgänge aufweist, deren Signalleitungen Zeitwerte in Form von Digitalsignalen an zugeordnete Register weiterleiten, daß Signaleingänge für einen Controller-Baustein vorgesehen sind und daß dem Controller-Baustein zugeordnete Zählerbausteine vorgesehen sind, deren Zählwert bei Erreichen des korrespondierenden Zeitwerts indem Controller-Baustein die jeweiligen Signal-Ausgänge beschaltet und die geforderte Stromrichtung und eine geforderte Sinusfunktion auf die betreffende Motor-Phase überträgt.

Ein Ausführungsbeispiel der Erfindung ist in der Zeichnung dargestellt und wird im folgenden näher beschrieben. Es zeigen

Fig. 1 eine Gesamtschaltungsanordnung, in der auch die Steuerung für den Schrittmotor angeschlossen ist,

Fig. 2 die Blockdarstellung des ASIC's, in der die Motorsteuerung enthalten ist,

Fig. 3 den auf die Motorsteuerung entfallenden Schaltungsteil des ASIC's,

Fig. 4 einen sinusförmigen Signalverlauf, wobei für einen zweiphasigen Schritt-Motor verschiedene Parameter in Abhängigkeit des Zeitverlaufs dargestellt sind,

Fig. 5a den Spannungsverlauf über der Zeit t für vier verschiedene

bis 5d Parameter, die entsprechden Bausteinen zugeordnet sind, und

Fig. 6 den Stromverlauf über der Zeit t.

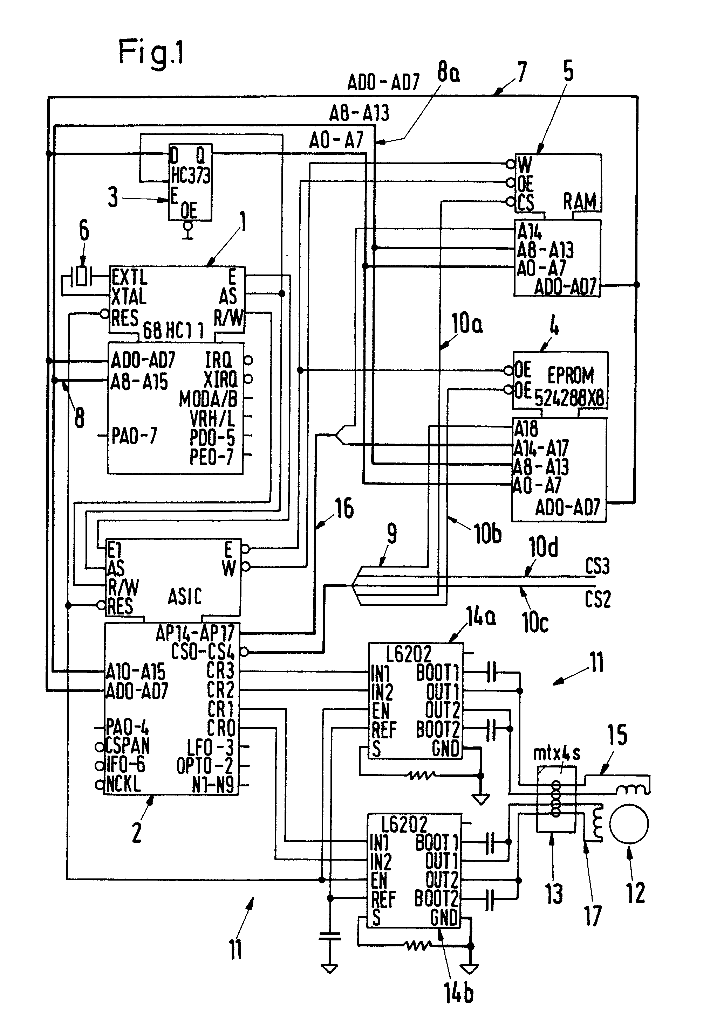

Gemäß Fig. 1 ist die gezeichnete Schaltung in einem datenverarbeitenden Gerät, insbesondere in einem Drucker, wie z.B. einem Matrixdrucker, verwendet. Mit anderen Worten ist die dargestellte Schaltung noch für andere Funktionen vorgesehen, im vorliegenden Fall z.B. für eine temporäre Adreßerweiterung eines datenaufnehmenden Speichers.

Gemäß Fig. 1 ist ein Mikroprozessor 1, z.B. des Typs 68HC11 - Motorola, vorgesehen, dem ein kundenspezifischer, integrierter Schaltkreis 2 (im folgenden kurz ASIC genannt) zugeordnet ist. Ein Adreßsignalspeicher 3, ein Lesespeicher 4 sowie ein Schreib-Lese-Speicher 5 sind nicht für die vorliegende Erfindung vorgesehen. Der üblicherweise mit einem Oszillator 6 ausgerüstete Mikroprozessor 1 ist über Adreß- und Datenbusleitungen 7 mit dem ASIC 2 dem Adreßsignalspeicher 3, dem Lesespeicher 4 sowie dem Schreib-Lese- Speicher 5 verbunden. Reine Adreßleitungen 8 verbinden den Mikroprozessor 1 mit dem ASIC 2 und dem Lesespeicher 4 sowie dem Schreib-Lese-Speicher 5. Von diesen Adreßleitungen 8 verlaufen Leitungen 8a auch zum Lesespeicher 4 und dem Schreib-Lese-Speicher 5. Zusätzliche Adreßleitungen 9 und 16 verbinden den ASIC 2 mit dem Lesepeicher 4 und dem Schreib-Lese-Speicher 5. Zur Auswahl der Bausteine dienen die Chip-Selekt-Leitungen 10a, 10b, 10c und 10d.

Der für die vorliegende Erfindung der Steuerung eines Schrittmotors relevante Teil der Digitalschaltung ist mit 11 bezeichnet.

An den ASIC 2 sind für jede Phase eines Schrittmotors 12 über einen Stecker 13 jeweils ein Leistungs-Treiberbaustein 14a bzw. 14b angeschlossen.

Der Leistungs-Treiberbaustein 14a ist demgemäß an eine Motor-Phase 15 und der Leistungs-Treiberbaustein 14b an eine Motor-Phase 17 angeschlossen.

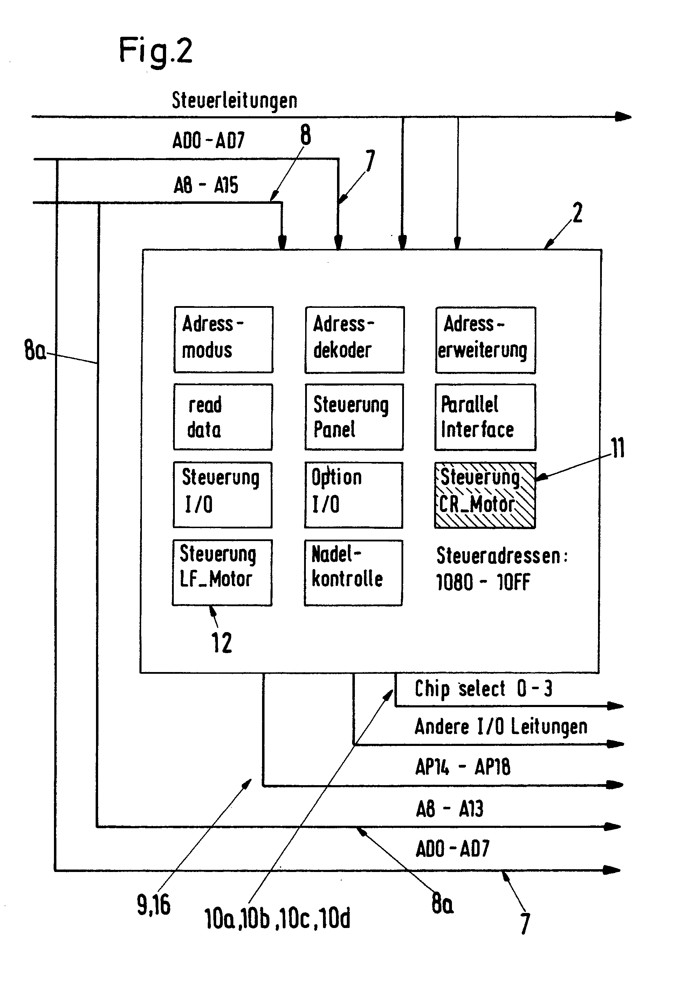

Aus dem ASIC 2 betrifft die vorliegende Erfindung den Schaltungsteil 11, der in Fig. 2 im Blockschaltbild dargestellt ist.

Die Aufgaben des Schrittmotors 12 gliedern sich in exaktes Positionieren in kürzester Zeit und Erreichen einer gleichförmigen Bewegung, z.B. eine Bewegung mit konstanter Geschwindigkeit. Nach der jeweiligen Position, Drehrichtung und Drehgeschwindigkeit errechnet der Mikroprozessor 1 die Anzahl von Schritten, die für eine bestimmte Bewegung zu verfahren sind und welche Endgeschwindigkeit gewählt wird und welche Beschleunigungsund Bremserhöhungen zu benutzen sind und welches Start- und Stoppverfahren nötig ist.

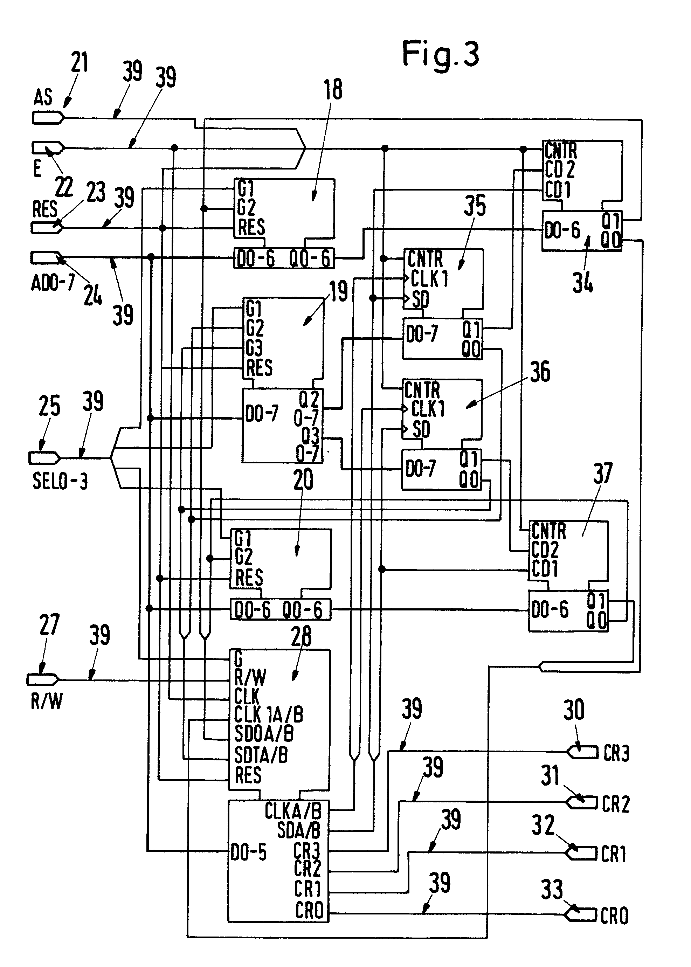

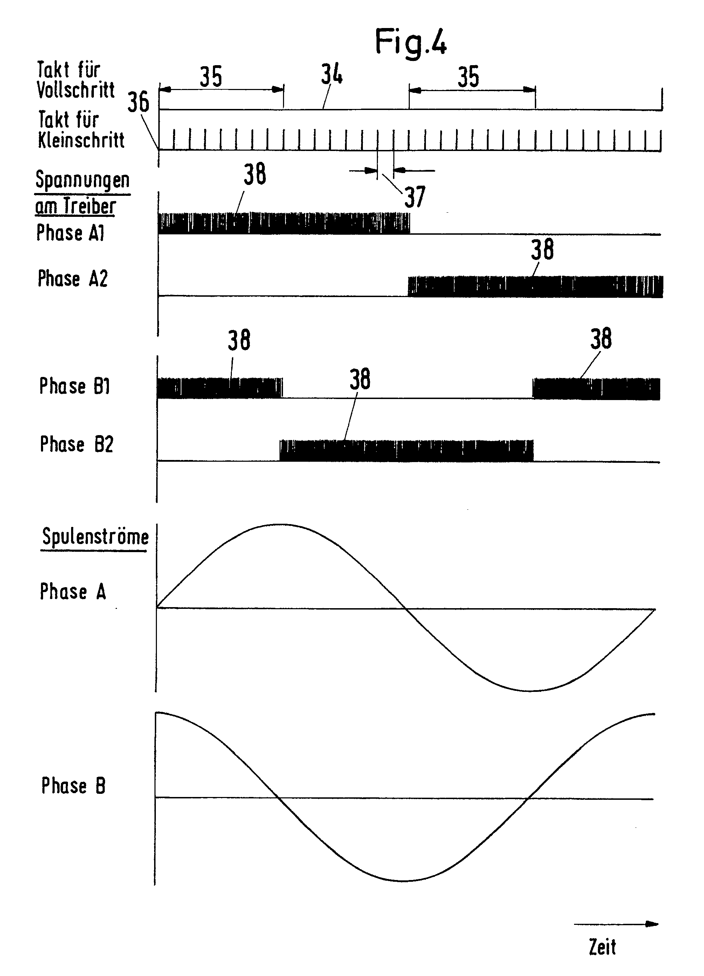

Der ASIC 2 (Fig. 3) bietet dem Mikroprozessor 1 die Möglichkeiten, in einer Reihe von Registern 18, 19 und 20 Daten abzulegen, die die Bestromung des Schrittmotors 12 beeinflussen. Diese Beeinflussung beruht darauf, daß alle Phasen 15 und 17 des Schrittmotors 12 mit einer getakteten Speisespannung beaufschlagt werden können, wobei zwar die Versorgungsspannung konstant bleibt, aber die Effektivspannung durch Taktgebung verändert werden kann. Der Mikroprozessor 1 und/oder das ASIC 2 hat die Aufgabe, diesen getakteten Spannungsverlauf zu erzeugen. Hierbei schreibt der Mikroprozessor 1 über die Register 18, 19 und 20 eine Einschaltzeit T1 sowie eine Einschaltzeit T/ein (in der Zeichnung als T/on bezeichnet) vor, die zusammen mit einer Grundzeit T ein jeweils pro Motorphase 15 bzw. 17 gewünschtes Tast-Verhältnis (ein Tast-Verhältnis ist definiert als T/on: T) bildet (Fig. 3 und 4). Den Registern 18, 19 und 20 ist ein Eingang 21 (Adreßstrobe) ein Eingang 22 (E-clock), ein Eingang 23 (reset), ein weiterer Eingang 24 (Daten und Adressen), drei Eingänge 25 (Chip-select) zugeordnet. Ein Eingang 27 (Schreib-Lese-Steuerung) ist einem Controller 28 zugeordnet. Der Eingang 25 ist außerdem an den Controller 28 angeschlossen. Dem Controller 28 sind ebenfalls die Eingänge 22, 23 und 24 zugordnet. Die Ausgänge 30 und 31 sind am ASIC 2 in Fig. 1 ebenfalls sichtbar und führen zu dem Treiberbaustein 14a, währenddem Ausgänge 32 und 33 zu dem Treiberbaustein 14b geführt sind. Die Eingänge 22 und 23 sind außer mit den Registern 18, 19 und 20 noch wie auch der Eingang 21 mit Zählerbausteinen 34, 35, 36 und 37 verbunden, wie gezeichnet.

Nach dem Einschreiben von Zeitwerten in die Register 18, 19 und 20 wird in den Controller 28 eingegeben, wie die beiden Motor-Phasen 15 und 17 getaktet werden und in welche Richtung der Strom zu fließen hat. Der Controller 28 selektiert den entsprechenden Zählerbaustein 34 bis 37. Der jeweils selektierte Zählerbaustein zählt bis auf den in den Registern 18 bis 20 abgelegten Zeitwert hoch. In Abhängigkeit des Zähl- bzw. bzw. Zeitwerts werden von dem Controller 28 die jeweiligen Ausgänge 30 bis 33 beschaltet. Dieser Signalverlauf des ASIC's 2 wird danach in den Leistungs-Treiberbausteinen 14a und 14b verstärkt und in die Motorspannung umgesetzt.

Gemäß Fig. 4 ist der Signalverlauf dargestellt. Der Mikroprozessor 1 erzeugt neben einem Takt 34 für Vollschritte 35 einen Takt 36 für Kleinschritte 37. Pro Kleinschritt 37 und pro Motorphase 15 bzw. 17 wird in das ASIC 2 ein Zeitwert T/ein (T/on) geladen, der zusammen mit einer Zeit T/aus zu einer puls-pausen-modulierten Rechteckspeisespannung 38 generiert wird (Spannungen an den Treiberbausteinen 14a, 14b; Phase A1, A2 und Phase B1, B2). Der Strom (Spulenströme Phase A, Phase B) folgt hierbei abhängig von der Effektivspannung der momentanen Stromhöhe einer Euler'schen Funktion. Durch Aneinanderreihen der Kleinschritte 37 kann ein annähernd sinusförmiger Stromverlauf (Spulenströme, Phasen A, B) erzeugt werden, wobei der Spulenstrom der Phase A gegenüber dem Spulenstrom der Phase B um 90 Grad versetzt ist. Nachdem im Mikroprozessor 1 die Einteilung in Kleinschritte 37 bekannt ist, wird der Bewegungsvorgang gestartet. Dabei wird die jeweilige Dauer eines einzelnen physikalischen Motorschrittes unterteilt in eine Reihe der Kleinschritte 37 mit derselben Zeitdauer. Je größer die Anzahl dieser Kleinschritte 37 pro physikalischem Motorschritt ist, um so feiner kann die gewünschte Stromform der Sinusform angenähert werden.

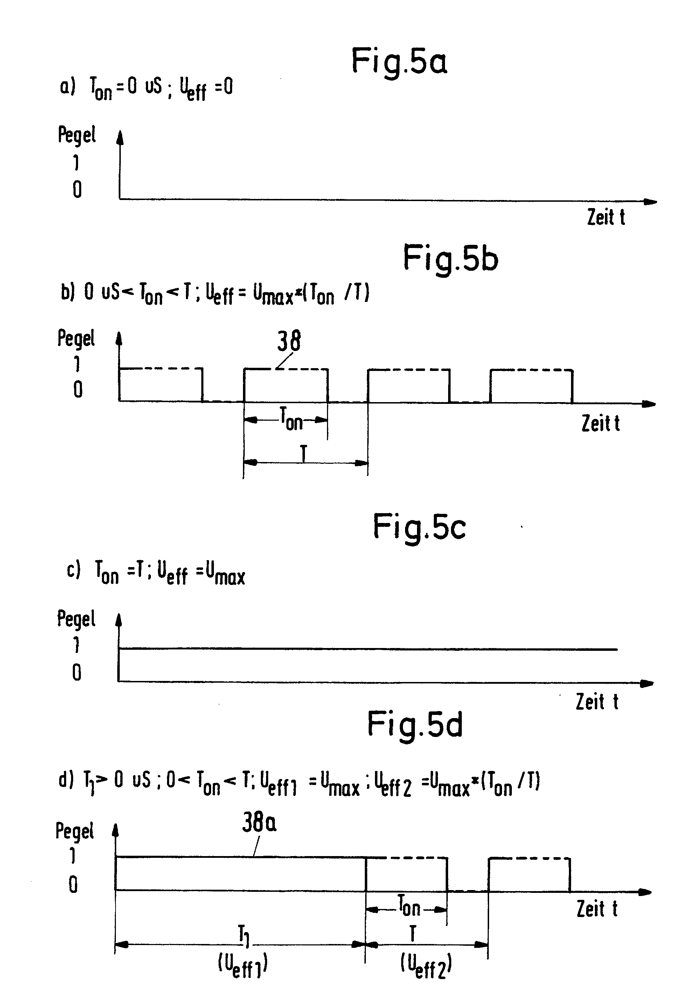

Das ASIC 2 (Fig. 5a bis 5d) generiert die puls-pausen-modulierte Rechteckspeisespannung 38. Durch Vorgabe unterschiedlicher Einschaltzeiten T/on kann die Effektivspannung 38a stufenweise von Null bis auf die maximale Spannung gesetzt werden. Außerdem ist in dem ASIC 2 vorgesehen, eine Zeit T1 vorzugeben, in welcher das Ausgangssignal nicht getaktet ist, sondern auf einem logischen Pegel 1 (Fig. 5a bis 5d) gehalten wird. Nach Ablauf der Zeit T1 wird entsprechend dem letzten vorgegebenen Wert für die Einschaltzeit T/on das Ausgangssignal wieder getaktet. Diese Funktion bietet die Möglichkeit, die Kleinschritte 37 nochmals zu unterteilen, um ohne zusätzliche Mikroprozessor-Kapazität den Strom gegenüber dem durch Takten vorgegebenen Wert erheblich zu erhöhen. Diese Verfahrensweise stellt eine Funktion dar, die z.B. beim Starten des Schrittmotors 12 nützlich sein kann, wenn innerhalb kürzester Zeit die maximale Energie auf den Schrittmotor 12 übertragen werden soll, um dann mittels der getakteten Spannung den Strom auf eine bestimmte Stromkurve zu zwingen. Diese Verfahrensweise erfolgt dann ohne ein weiteres Eingreifen des Mikroprozessors 1.

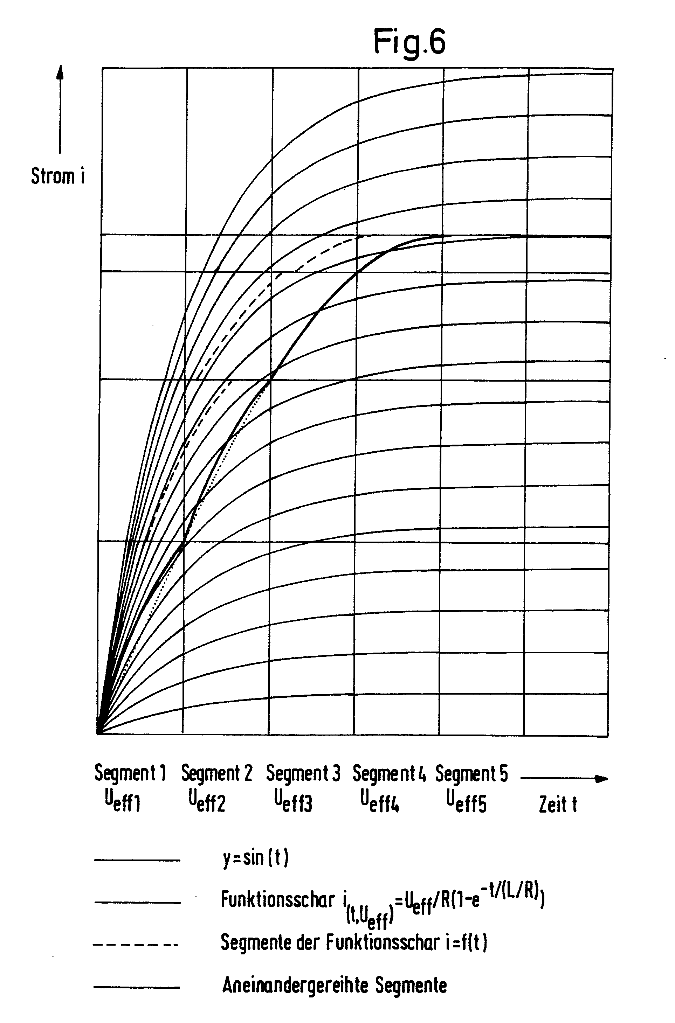

Wie weiterhin in Fig. 6 gezeigt wird, folgt der Stromverlauf im Schrittmotor 12 einer Euler'schen Funktion. Die Stromhöhe strebt gegen den Grenzwert aus Effektivspannung 38a und Ohm'schen Widerstand. Die Geschwindigkeit der Annäherung an den Grenzwert bestimmt die elektrische Zeitkonstante. Für jede Effektiv-Spannung gibt es eine charakteristische Funktion, welcher der Strom folgt. Wird im bestromten Zustand die Effektivspannung geändert, so folgt der Strom ab der augenblicklichen Stromhöhe der neuen Kurve. Durch Aufteilung eines physikalischen Motorschrittes in mehrere Kleinschritte 37 und Variation der Effektiv-Spannung 38a kann der Strom nun segmentweise (Segment 1 bis Segment 5) einzelnen Verläufen der Funktionsschar folgen. Diese Verfahrensweise gilt für ansteigenden, wie auch für abfallenden Strom. Die Auswahl geeigneter Effektiv-Spannungen und die Aneinanderreihung der einzelnen Segmente erlaubt die Erzeugung eines Stromverlaufs, der dem Verlauf einer Sinusfunktion weitestgehend ähnlich ist. Fig. 6 zeigt die Funktionsschar des Stromes abhängig von der Effektiv-Spannung 38a. Die durchgezogene gestrichelte Linie zeigt die gewünschte Idealform des Stromes, die Sinusform. Ein Vollschritt 34 des Schrittmotors 12 entspricht der Zeit von Null bis 90 Grad der Sinuskurve. Diese Zeit wurde hier durch vier geteilt, um die einzelnen Segmente zu erzeugen. Pro Segment wird durch den Mikroprozessor 1, das ASIC 2 und die Leistungs-Treiberbausteine 14a, 14b eine spezielle Effektiv-Spannung erzeugt. Abhängig von der aktuellen Stromhöhe strebt nun der Motorstrom in Richtung der durch die neue Effektiv-Spannung vorgegebenen Stromhöhe - und das entlang der jeweiligen Stromkurve, bis eine neue Effektiv-Spannung vorgegeben wird. Durch eine Aneinanderreihung der Segmente kann der Stromverlauf weitestgehend beeinflußt werden.

Die Erfindung beruht daher darauf, daß die Werte für Geschwindigkeit, Drehrichtung und Weglänge sowie weitere steuerungsspezifische Parameter im Mikroprozessor 1 errechnet werden, daß durch Unterteilung des Zeitrasters Kleinschritte 37 gebildet werden, daß für jeden Kleinschritt 37 durch den kundenspezifischen Schaltkreis 2 pro Motorphase 15 bzw. 17 ein Abschnitt eines vorgegebenen Stromverlaufs erzeugt wird, indem pro Abschnitt eine Rechteckspeisespannung 38 mit veränderbarer Frequenz und mit veränderbarem Tastverhältnis erzeugt wird, so daß die Folge der Kleinschritte 37 einen weitestgehend angenäherten sinusförmigen Stromverlauf bildet.

Hierzu besitzt der ASIC 2 mehrere Signaleingänge 21 bis 25 und 27 und Signalausgänge 30 bis 33, deren Signalleitungen 39 Zeitwerte in Form von Digitalsignalen an zugeordnete Register 18, 19 und 20 weiterleitet, wobei die Signaleingänge 22 bis 25 und 27 für den Controller 28 vorgesehen sind und wobei dem Controller 28 Zählerbausteine 34 bis 37 zugeordnet sind, deren Zählwerk abhängig von dem korrespondierenden Zeitwert, indem der Controller 28 die jeweiligen Signal-Ausgänge 30 bis 33 beschaltet und die geforderte Stromrichtung und die geforderte Sinusfunktion auf die betreffende Motor-Phase 15 bzw. 17 überträgt. Diese beschriebene Steuerungsschaltung arbeitet rein digital. Die in den ASIC 2 integrierte Digitalschaltung reduziert die Anzahl der digitalen Zusatz-Bauelemente auf diesen Schaltkreis.

## Patentansprüche

1. Steuerung für einen Schrittmotor, bestehend aus einem Mikroprozessor mit Programm und Arbeitsspeicher, einem kundenspezifischen Schaltkreis und einem Treiberbaustein, der mit der Steuereinrichtung des Schrittmotors verbunden ist,
dadurch gekennzeichnet,
daß die einzelnen Phasen (15,17) des Schrittmotors (12) jeweils mit einer variabel getakteten Speisespannung (38) beaufschlagbar sind und daß mittels des Mikroprozessors (1) die Modulation der Phasen (15,17) zeitlich abhängig veränderbar ist.

2. Steuerung nach Anspruch 1,
dadurch gekennzeichnet,
daß zur Entlastung des Mikroprozessors (1) die Modulation der Phasen (15,17) über eine zusätzliche Digitalschaltung veränderbar ist.

3. Steuerung nach den Ansprüchen 1 und 2,
dadurch gekennzeichnet,
daß die Werte für Geschwindigkeit, Drehrichtung und Weglänge sowie weitere steuerungsspezifische Parameter im Mikroprozessor (1) errechnet werden, daß durch Unterteilung des Zeitrasters Kleinschritte (37) gebildet werden, daß für jeden Kleinschritt (37) durch den kundenspezifischen Schaltkreis (2) pro Motor-Phase (15,17) ein Abschnitt eines vorgegebenen Stromverlaufs erzeugt wird, indem pro Abschnitt eine Rechteckspeisespannung (38) mit veränderbarer Frequenz und mit veränderbarem Tastverhältnis erzeugt wird, so daß die Folge der Kleinschritte (37) einen weitestgehend angenäherten vorgegebenen Stromverlauf bildet.

4. Steuerung nach den Ansprüchen 1, 2 oder 3,
dadurch gekennzeichnet,
daß der kundenspezifische Schaltkreis (2) mehrere Signaleingänge (21 bis 25 und 27) und Signalausgänge (30 bis 33) aufweist, deren Signalleitungen (39 bzw. 40) Zeitwerte in Form von Digitalsignalen an zugeordnete Register (18,19,20) weiterleiten, daß Signaleingänge (26,27) für einen Controller-Baustein (28) vorgesehen sind und daß dem Controller-Baustein (28) zugeordnete Zählerbausteine (34 bis 37) vorgesehen sind, deren Zählwerk abhängig vom korrespondierenden Zeitwert, indem der Controller (28) die jeweiligen Signal-Ausgänge (30 bis 33) beschaltet und die geforderte Stromrichtung und eine geforderte Sinusfunktion auf die betreffende Motor-Phase (15;17) überträgt.

Fig.1

# Fig.2

Steuerleitungen

ADO - AD7                           8

A8 - A15                                7

2

8a

| Adress- modus | Adress- dekoder | Adress- erweiterung |
| read data | Steuerung Panel | Parallel Interface |
| Steuerung I/O | Option I/O | Steuerung CR_Motor |
| Steuerung LF_Motor | Nadel- kontrolle | |

11

Steueradressen: 1080 - 10FF

12

Chip select 0 - 3

Andere I/O Leitungen

AP14 - AP18

A8 - A13

ADO - AD7

9,16          10a,10b,10c,10d          8a          7

# Fig.3

# Fig.4

Takt für Vollschritt

Takt für Kleinschritt

Spannungen am Treiber

Phase A1

Phase A2

Phase B1

Phase B2

Spulenströme

Phase A

Phase B

Zeit

# Fig.5a

a) $T_{on} = 0 \ uS$ ; $U_{eff} = 0$

Pegel
1
0
                                                    Zeit t

# Fig.5b

b) $0 \ uS < T_{on} < T$ ; $U_{eff} = U_{max} * (T_{on} / T)$

Pegel
1
0

38

$T_{on}$

$T$

Zeit t

# Fig.5c

c) $T_{on} = T$ ; $U_{eff} = U_{max}$

Pegel
1
0
                                                    Zeit t

# Fig.5d

d) $T_1 > 0 \ uS$ ; $0 < T_{on} < T$ ; $U_{eff1} = U_{max}$ ; $U_{eff2} = U_{max} * (T_{on} / T)$

Pegel
1
0

38a

$T_{on}$

$T$

Zeit t

$T_1$
$(U_{eff1})$

$(U_{eff2})$

# Fig.6

Segment 1    Segment 2    Segment 3    Segment 4    Segment 5 ⟶

$U_{eff1}$        $U_{eff2}$        $U_{eff3}$        $U_{eff4}$        $U_{eff5}$          Zeit t

———————        $y = \sin(t)$

———————        Funktionsschar $i_{(t, U_{eff})} = U_{eff}/R(1 - e^{-t/(L/R)})$

— — — — —        Segmente der Funktionsschar $i = f(t)$

———————        Aneinandergereihte Segmente

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 721 630 (OLYMPIA WERKE AG) <br> * das ganze Dokument * <br> − − − | 1-3 | H 02 P 8/00 <br> H 02 P 7/00 |
| A | DE-A-3 528 707 (MITSUBISHI DENKI K.K.) <br> * Seite 12, Zeile 29 - Seite 16, Zeile 29; Figur 3 * <br> − − − | 1-4 | |
| A | EP-A-0 207 172 (FANUC LTD) <br> * Seite 2, Zeilen 12 - 22; Figur 1 * <br> − − − | 1 | |
| A | ELEKTRONIK. vol. 33, no. 7, 06 April 1984, MUNCHEN DE <br> Seiten 57 - 62; Dipl.Ing.P.Baumwolf: "Schrittmotorsteuerung auf einem Chip" <br> * Figur 1 * <br> − − − | 1 | |
| A | ELECTRONIC DESIGN. vol. 36, no. 24, 27 Oktober 1988, HASBROUCK HEIGHTS, NJ US Seiten 101 - 104; F.Viallet: "control two steppers with one microprocessor" <br> − − − − | 1 | |

| RECHERCHIERTE SACHGEBIETE (Int. Cl.5) |
|---|
| H 02 P |

Der vorliegende Recherchenbericht wurde für alle Patentansprüche erstellt

| Recherchenort | Abschlußdatum der Recherche | Prüfer |
|---|---|---|
| Berlin | 17 September 91 | LEOUFFRE M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

−−−−−−−−−−−−−−−−−−−−−−−−−−−−−−−−−−−−−−−−−−−−−−−−−

& : Mitglied der gleichen Patentfamilie, übereinstimmendes Dokument